(19) Europäisches Patentamt
European Patent Office
Office européen des brevets

(11) **EP 3 421 420 B1**

(12) **EUROPEAN PATENT SPECIFICATION**

(45) Date of publication and mention
of the grant of the patent:
**11.05.2022 Bulletin 2022/19**

(21) Application number: **17756309.5**

(22) Date of filing: **14.02.2017**

(51) International Patent Classification (IPC):
**C01B 21/064** *(2006.01)* **C08K 3/38** *(2006.01)*
**C08L 101/00** *(2006.01)*

(52) Cooperative Patent Classification (CPC):
**C01B 21/0645; C01B 21/064; C08K 3/38;**
**C08L 101/00;** C01P 2004/03; C01P 2004/24;
C01P 2004/51; C01P 2004/54; C01P 2004/61;
C01P 2006/12

(86) International application number:
**PCT/JP2017/005332**

(87) International publication number:
**WO 2017/145869 (31.08.2017 Gazette 2017/35)**

(54) **HEXAGONAL BORON NITRIDE POWDER, PRODUCTION METHOD THEREFOR, RESIN COMPOSITION AND RESIN SHEET**

HEXAGONALES BORNITRIDPULVER, HERSTELLUNGSVERFAHREN DAFÜR, HARZZUSAMMENSETZUNG UND HARZFILM

POUDRE DE NITRURE DE BORE HEXAGONAL, SON PROCÉDÉ DE PRODUCTION, COMPOSITION DE RÉSINE, ET FEUILLE DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2016 JP 2016031405**

(43) Date of publication of application:
**02.01.2019 Bulletin 2019/01**

(73) Proprietor: **Showa Denko K.K.**
**Tokyo 105-8518 (JP)**

(72) Inventors:
• **OTSUKA, Yuki**
**Shiojiri-shi**
**Nagano 399-6461 (JP)**

• **FUKASAWA, Masaru**
**Shiojiri-shi**
**Nagano 399-6461 (JP)**

(74) Representative: **Strehl Schübel-Hopf & Partner**
**Maximilianstrasse 54**
**80538 München (DE)**

(56) References cited:
WO-A1-2012/062627 WO-A1-2015/122378
WO-A1-2015/122378 WO-A1-2016/092951
WO-A1-2016/092952 JP-A- 2004 035 273
JP-A- 2007 308 360 JP-A- 2011 098 882
JP-A- 2011 098 882 JP-A- 2015 212 217

EP 3 421 420 B1

**Description**

Technical Field

The present invention relates to a hexagonal boron nitride (hereinafter, also simply referred to as "hBN") powder and a resin sheet comprising the hBN powder and particularly relates to a high-purity hBN powder comprising hBN primary particles having a small aspect ratio, a method for producing the hBN powder, and a resin composition and a resin sheet each comprising the hBN powder.

Background Art

An hBN particle has a layered structure similar to that of graphite, has excellent properties such as thermal conductive properties, electric insulation, chemical stability, lubricating properties as a solid, and thermal shock resistance, and therefore is used as an insulation/heat dissipation material, a solid lubricant, solid mold release agent, a raw material for producing an hBN sintered body, and the like taking advantage of these properties.

Conventionally, the hBN powder has generally been obtained by mixing a boron compound such as boric acid or borax and a nitrogen compound such as melamine or urea, then firing the resultant mixture at a relatively low temperature under an ammonia atmosphere or a non-oxidizing gas atmosphere to produce a crude hBN powder having a low crystallinity, and subsequently firing the obtained crude hBN powder at a high temperature under a non-oxidizing gas atmosphere to allow the crystals to grow (PTLs 1 to 3).

A sheet, tape, grease, or the like in which such an hBN powder is contained as a filler in a resin material such as an epoxy resin, silicone rubber, or the like is used as a thermally conductive member, such as, for example, a thermally conductive sheet or thermally conductive grease having electric insulation, for effectively dissipating heat generated from an electronic component. To further improve the thermal conductive properties of these thermally conductive members, attempts to increase the filling ability of the hBN powder in the thermally conductive members are being made.

However, the primary particle of hBN generally has a scale-like particle shape, and the ratio of the average longer diameter to the average thickness (hereinafter, also simply referred to as "aspect ratio") of the primary particles is high, and therefore when the filling ability is enhanced, the primary particles easily face in a constant direction and the orientation anisotropy easily occurs in a molded article, such as a thermally conductive sheet, obtained by molding a resin composition comprising the hBN powder. When such orientation anisotropy occurs, the properties such as the thermal conductive properties, the electric insulation, and the thermal heat resistance are lowered.

Therefore, in recent years, a method for mixing the hBN powder comprising secondary particles (hereinafter, also simply referred to as "aggregate") in which primary particles of hBN aggregate with a resin has been used for the purpose of improving the filling ability of the hBN powder and suppressing orientation anisotropy in a thermally conductive sheet (PTLs 4, 5).

However, in the case where the aspect ratio of the primary particles that constitute the aggregate is high, when the strength of the aggregate is not sufficient, the aggregate may disintegrate in a process of forming a composite with the resin, so that the orientation anisotropy occurs in the thermally conductive sheet, which is attributable to the high aspect ratio of the primary particles. In addition, when the disintegration of the aggregate is avoided, there is a problem that the filling ability of the hBN powder in the thermally conductive sheet cannot be enhanced sufficiently and the thermal conductivity is lowered.

Thus, attempts to obtain the hBN powder comprising primary particles having a low aspect ratio by subjecting boron carbide to nitriding treatment under a condition of 1800°C or more in a nitrogen atmosphere, then mixing a resultant product with diboron trioxide or a precursor thereof, thereafter firing the resultant mixture, and removing a carbon component after that have been made for the purpose of improving the filling ability of the hBN powder in a thermally conductive sheet and improving the thermal conductive properties, but a sufficiently low aspect ratio has not been achieved yet (PTLs 6, 7).

As another attempt to allow primary particles having a low aspect ratio to be contained in the hBN powder, a mixture obtained by adding an oxygen-containing calcium compound as a crystallization catalyst to a boron compound and a carbon source is heated under a nitrogen atmosphere, but a sufficiently low aspect ratio has not been achieved yet when an average is taken for all the primary particles contained in the hBN powder, and further reduction in the aspect ratio has been desired from the viewpoint of improving the thermal conductive properties (PTL 8).

PTL1: JP 61-286207 A
PTL2: JP 3461651 B
PTL3: JP 5-85482 B
PTL4: JP 2011-098882 A

PTL5: JP 2005-343728 A
PTL6: JP 4750220 B
PTL7: JP 5081488 B
PTL8: JP 2015-212217 A

WO 2015/122378 A1 and EP 3 106 429 A1 disclose scaly hexagonal boron nitride particles having an average particle diameter of 0.05 to 20 μm and a ratio of major diameter to thickness of no greater than 6.

JP 2011 098882 A and EP 2 487 134 A1 disclose a process involving firing commercially available boron carbide powder at 2000 °C for a period of 10 hours, followed by cooling, mixing with $B_2O$, and a second firing process at 2000 °C for 10 hours.

Disclosure of Invention

The present invention intends to provide a high-purity hBN powder comprising hBN primary particles having a low aspect ratio, the hBN powder having a more suppressed orientation anisotropy in a resin composition or a resin sheet than conventional hBN powders and having superior thermal conductive properties, a method for producing the hBN powder, and a resin composition and a resin sheet each comprising the hBN powder.

The present inventors have conducted diligent studies to find that an hBN powder having a smaller average longer diameter (L) of primary particles than conventional hBN powders and having a lower ratio of the average longer diameter (L) to the average thickness (D) of the primary particles, [L/D], than conventional hBN powders is obtained when a fired product obtained by firing a boron carbide powder under a nitrogen gas atmosphere is heated at a particular temperature under an oxygen gas-containing gas atmosphere, thereby decarbonizing the fired product, and thereafter the decarbonized product is fired again under a nitrogen gas atmosphere.

The present invention is based on the above-described findings and is defined in the appended claims.

Brief Description of Drawings

[Fig. 1] Fig. 1 is an SEM image of the hBN powder obtained in Example 1.
[Fig. 2] Fig. 2 is an enlarged SEM image of the hBN powder obtained in Example 1.
[Fig. 3] Fig. 3 is an SEM image of an hBN powder obtained in Comparative Example 1.
[Fig. 4] Fig. 4 is an enlarged SEM image of the hBN powder obtained in Comparative Example 1.

Description of Embodiments

[Hexagonal Boron Nitride Powder]

The hexagonal boron nitride powder (hBN powder) according to the present invention has an average longer diameter (L) of primary particles in the hBN powder of 10 μm or less, an average thickness (D) of the primary particles in the hBN powder of 0.20 μm or more, a ratio of the average longer diameter (L) to the average thickness (D), [L/D] (hereinafter, also simply referred to as "aspect ratio [L/D]"), of 3.0 or more and 5.0 or less, and a content of primary particles having a ratio of a longer diameter (l) to a thickness (d), [l/d] (hereinafter, also simply referred to as "aspect ratio [l/d]"), of 3.0 or more and 5.0 or less of 25% or more.

It is to be noted that in the present specification, the "average longer diameter" means a number average value of the longer diameters of the primary particles, and the "average thickness" means a number average value of the thicknesses of the primary particles. In addition, the "longer diameter" means the maximum diameter in a planer direction of a scale-like particle.

According to the present invention, a high-purity hBN powder comprising hBN primary particles having a low aspect ratio, the hBN powder having a more suppressed orientation anisotropy in a resin composition or a resin sheet than conventional hBN powders and having superior thermal conductive properties, can be obtained. The reason that such an effect is obtained is not clear, but it is considered that the hBN powder according to the present invention has a small average longer diameter of primary particles of hBN, so that the filling ability to a resin composition can be improved in the process of forming a composite with a resin. In addition, it is considered that the hBN powder according to the present invention has a low aspect ratio [L/D] and a particular range of a content of primary particles having a particular aspect ratio [l/d], and therefore the hBN powder can improve the orientation anisotropy in a resin composition or a resin sheet and can exhibit high thermal conductive properties.

However, these are estimates, and the present invention is not limited to these mechanisms.

<Primary Particles>

The average longer diameter (L) of the primary particles in the hBN powder according to the present invention is 10 $\mu$m or less, preferably 0.50 $\mu$m or more and 10 $\mu$m or less, more preferably 1.0 $\mu$m or more and 8.0 $\mu$m or less, still more preferably 1.0 $\mu$m or more and 6.0 $\mu$m or less, further still more preferably 1.5 $\mu$m or more and 5.0 $\mu$m or less, further still more preferably 1.5 $\mu$m or more and 4.0 $\mu$m or less, and further still more preferably 1.5 $\mu$m or more and 3.5 $\mu$m or less from the viewpoint of improving the filling ability to a resin composition and improving the thermal conductive properties. The hBN powder comprising small primary particles having an average longer diameter (L) of 10 $\mu$m or less can improve the filling ability to a resin composition in the process of forming a composite with a resin.

The average thickness (D) of the primary particles in the hBN powder according to the present invention is 0.20 $\mu$m or more, preferably 0.24 $\mu$m or more, more preferably 0.28 $\mu$m or more, still more preferably 0.32 $\mu$m or more, further still more preferably 0.36 $\mu$m or more, further still more preferably 0.40 $\mu$m or more, further still more preferably 0.44 $\mu$m or more, and is preferably 1.0 $\mu$m or less, more preferably 0.80 $\mu$m or less, and still more preferably 0.60 $\mu$m or less from the viewpoint in improvements in the thermal conductive properties.

It is to be noted that the average longer particle diameter (L) and average thickness (D) of the primary particles are measured by the method described in Examples.

The aspect ratio [L/D] of the primary particles in the hBN powder according to the present invention is 3.0 or more and 5.0 or less, preferably 3.0 or more and less than 5.0, more preferably 3.4 or more and less than 5.0, still more preferably 3.6 or more and 4.9 or less, further still more preferably 3.8 or more and 4.9 or less, further still more preferably 4.0 or more and 4.8 or less, and further still more preferably 4.4 or more and 4.8 or less from the viewpoint of suppressing the orientation anisotropy and improving the thermal conductive properties.

It is to be noted that the aspect ratio [L/D] is measured by the method described in Examples.

The content of primary particles forming the hBN powder according to the present invention and having an individual aspect ratio [l/d] of 3.0 or more and 5.0 or less is 25% or more, preferably 30% or more, more preferably 40% or more, still more preferably 50% or more, and further still more preferably 60% or more from the viewpoint of improving the filling ability to a resin composition, suppressing the orientation anisotropy, and improving the thermal conductive properties, and is preferably 80% or less, more preferably 70% or less from the viewpoint of production superiority.

It is to be noted that the content is measured by the method described in Examples.

<hBN Powder>

The hBN powder according to the present invention comprises an aggregate of two or more primary particles, and when the hBN powder is put through a sieve having an opening of 106 $\mu$m, the hexagonal boron nitride powder passing through the sieve preferably has a 50% volume cumulative particle size $D_{50}(1)$ (hereinafter, also simply referred to as "$D_{50}(1)$") of 25 $\mu$m or more and 100 $\mu$m or less

The hBN powder according to the present invention is classified using a sieve having an opening of 106 $\mu$m with a dry type vibrating sieve apparatus (sieving time of 60 minutes) to obtain an hBN powder passing through the sieve, the hBN powder being classified to have a $D_{50}(1)$ ($D_{50}$ before ultrasonic treatment) of 25 $\mu$m or more and 100 $\mu$m or less (hereinafter, also simply referred to as "classified hBN powder").

In addition, the $D_{50}(1)$ before the ultrasonic treatment is measured by the method described in Examples.

The BET specific surface area of the hBN powder according to the present invention is preferably less than 10 $m^2/g$, more preferably 0.5 $m^2/g$ or more and 9.5 $m^2/g$ or less, still more preferably 1.0 $m^2/g$ or more and 9.0 $m^2/g$ or less, further still more preferably 1.5 $m^2/g$ or more and 8.0 $m^2/g$ or less, further still more preferably 1.5 $m^2/g$ or more and 7.0 $m^2/g$ or less, further still more preferably 2.0 $m^2/g$ or more and 6.0 $m^2/g$ or less, further still more preferably 2.0 $m^2/g$ or more and 5.0 $m^2/g$ or less, and further still more preferably 2.5 $m^2/g$ or more and 4.5 $m^2/g$ or less from the viewpoint of improvements in the thermal conductive properties. When the BET specific surface area is less than 10 $m^2/g$, the specific surface area of the aggregate contained in the hBN powder is also small and the amount of a resin component to be taken in the aggregate in producing a resin composition is small. Therefore, it is considered that the thermal conductive properties are improved because the amount of the resin component existing between the aggregates becomes relatively large to improve the dispersibility of the aggregates to the resin component, so that the hBN powder and the resin component become well blended.

It is to be noted that the BET specific surface area of the hBN powder can be measured by the BET one-point method utilizing the fluid process described in Examples.

The purity of the hBN powder according to the present invention, namely the purity of hBN in the hBN powder according to the present invention is preferably 96% by mass or more, more preferably 98% by mass or more, still more preferably 99% by mass or more, further still more preferably 99.5% by mass or more, and further still more preferably 99.8% by mass or more from the viewpoint of improvements in the thermal conductive properties.

It is to be noted that the purity of the hBN powder can be measured by the method described in Examples.

The boron oxide (hereinafter, also simply referred to as "$B_2O_3$") content in the hBN powder according to the present invention is preferably 0.120% by mass or less, more preferably 0.001% by mass or more and 0.110% by mass or less, still more preferably 0.005% by mass or more and 0.100% by mass or less, further still more preferably 0.008% by mass or more and 0.080% by mass or less, and further still more preferably 0.010% by mass or more and 0.070% by mass or less from the viewpoint of improvements in the thermal conductive properties and production superiority.

It is to be noted that the $B_2O_3$ content can be measured by the method described in Examples.

The calcium hexaboride (hereinafter, also simply referred to as "$CaB_6$") content in the hBN powder according to the present invention is preferably 0.50% by mass or less, more preferably 0.20% by mass or less, still more preferably 0.10% by mass or less, further still more preferably 0.050% by mass or less, further still more preferably 0.040% by mass or less, further still more preferably 0.030% by mass or less, further still more preferably 0.020% by mass or less, and further still more preferably 0.010% by mass or less from the viewpoint of suppressing coloration of the hBN powder.

It is to be noted that the $CaB_6$ content can be measured by the method described in Examples.

The carbon content in the hBN powder according to the present invention is preferably 0.50% by mass or less, more preferably 0.20% by mass or less, still more preferably 0.10% by mass or less, further still more preferably 0.05% by mass or less, further still more preferably 0.04% by mass or less, further still more preferably 0.03% by mass or less, and further still more preferably 0.02% by mass or less from the viewpoint of improvements in the thermal conductive properties and the electric insulation.

It is to be noted that the carbon content can be measured by the method described in Examples.

[Surface Treatment]

A surface treatment may be performed as necessary on the hBN powder according to the present invention using various coupling agents or the like for the purpose of enhancing the dispersibility in the resin component and improving the processability in producing a resin composition by dispersing the hBN powder according to the present invention in a resin component.

(Coupling Agent)

Examples of the coupling agent include silane-based, titanate-based, and aluminum-based coupling agents, and among these, silane-based coupling agents are preferable in terms of improvements in dispersibility of the hBN powder. As the silane-based coupling agent, aminosilane compounds such as γ-aminopropyltrimethoxysilane, γ-aminopropyltriethoxysilane, γ-(2-aminoethyl)aminopropyltrimethoxysilane, γ-(2-aminoethyl)aminopropyltriethoxysilane, γ-anilinopropyltrimethoxysilane, γ-anilinopropyltriethoxysilane, N-β-(N-vinylbenzylaminoethyl)-γ-aminopropyltrimethoxysilane, and N-β-(N-vinylbenzylaminoethyl)-γ-aminopropyltriethoxysilane are particularly preferably used.

[Method for Producing Hexagonal Boron Nitride Powder]

The hBN powder according to the present invention can be obtained by a production method comprising the following steps 1 to 3 using a boron carbide ($B_4C$) powder as a starting material.

Step 1: a step of firing a boron carbide powder at 1600°C or more and 2200°C or less under a nitrogen gas atmosphere;
Step 2: a step of heating a fired product obtained in the step 1 at 500°C or more and less than 1500°C under an oxygen gas-containing gas atmosphere, thereby decarbonizing the fired product; and
Step 3: a step of firing again a product after decarbonization under a nitrogen gas atmosphere, the product obtained in the step 2, at 1500°C or more and 2200°C or less.

In the production method according to the present invention, an oxygen-containing calcium compound is not added as a crystallization catalyst. Therefore, the hBN powder having a low $CaB_6$ content and having excellent thermal conductive properties can be obtained without producing as a by-product calcium hexaboride ($CaB_6$) that exhibits a black color.

(Step 1)

The step 1 is a step of firing a boron carbide powder at 1600°C or more and 2200°C or less under a nitrogen gas atmosphere, thereby obtaining a fired product. In the step 1, production of a boron nitride powder is allowed to progress by firing the boron carbide powder under a nitrogen gas atmosphere based on the following formula (1), and to allow the production to progress, sufficient temperature, time, and partial pressure of the nitrogen gas need to be given.

$$(1/2)B_4C + N_2 \rightarrow 2BN + (1/2)C \qquad (1)$$

The firing temperature in the step 1 is 1600°C or more and 2200°C or less. When the firing temperature is 1600°C or more, the reaction in the formula (1) progresses effectively, and when the firing temperature is 2200°C or less, the reverse reaction in the formula (1) is suppressed. From these viewpoints, the firing temperature is preferably 1700°C or more and 2200°C or less, more preferably 1800°C or more and 2150°C or less, and still more preferably 1900°C or more and 2100°C or less.

The firing time in the step 1 is preferably 1 hour or more and 20 hours or less, more preferably 2 hours or more and 16 hours or less, still more preferably 3 hours or more and 12 hours or less, and further still more preferably 4 hours or more and 10 hours or less from the viewpoint of production superiority.

Firing is performed under a nitrogen gas atmosphere. The nitrogen gas concentration in the nitrogen gas atmosphere is preferably 60% by volume or more, more preferably 80% by volume or more, still more preferably 90% by volume or more, and further still more preferably 99% by volume or more. With respect to an oxygen gas, the less, the better.

The 50% volume cumulative particle size $D_{50}$ of the boron carbide powder to be used is preferably 45 $\mu$m or less, more preferably 30 $\mu$m or less, still more preferably 20 $\mu$m or less, further still more preferably 15 $\mu$m or less, further still more preferably 10 $\mu$m or less, and further still more preferably 5.0 $\mu$m or less from the viewpoint of reactivity, and is preferably 1.0 $\mu$m or more from the viewpoint of superiority in producing the boron carbide powder. When the $D_{50}$ of the boron carbide powder is 45 $\mu$m or less, the reaction in the formula (1) is facilitated, so that the yield of the fired product is improved, and an effective decarbonization in the subsequent decarbonization treatment can be facilitated.

It is to be noted that the $D_{50}$ of the boron carbide powder can be measured by the method described in Examples.

The purity of the boron carbide powder is preferably 90% by mass or more, more preferably 93% by mass or more, and still more preferably 95% by mass or more.

In the production method according to the present invention, impurities in the boron carbide powder are removed by high-temperature firing in the step 1 and in the step 3.

(Step 2)

The step 2 is a step of heating the fired product obtained in the step 1 at 500°C or more and less than 1500°C under an oxygen gas-containing gas atmosphere, thereby decarbonizing the fired product to obtain a product. Conventionally, when the fired product is decarbonized, firing has generally been performed adding boron oxide or the like at 1500°C or more under a non-oxidizing gas atmosphere, but in this case, a fine crystal of boron nitride is newly produced by a reductive nitriding reaction represented by the following formula (2) between a carbon component and boron oxide, so that a uniform grain growth over the whole fired product has been difficult to achieve.

$$B_2O_3 + 3C + N_2 \rightarrow 2BN + 3CO \qquad (2)$$

Thus, in the step 2 of the production method according to the present invention, by performing decarbonization through heating at less than 1500°C under an oxygen gas-containing gas atmosphere, grain growth during re-firing under a nitrogen gas atmosphere in the step 3 described later can be made uniform. Further, hBN contained in the product is oxidized during the heating and part of the hBN is converted into boron oxide. Thereby, boron oxide which has conventionally been added as a crystal growth assistant at the time of subsequent re-firing in a non-oxidizing gas atmosphere can be made unnecessary or can be greatly reduced.

The heating temperature in the step 2 is 500°C or more and less than 1500°C. When the heating temperature is 500°C or more, the decarbonization reaction progresses effectively, and when the heating temperature is less than 1500°C, the reductive nitriding reaction which occurs between the carbon component and boron oxide produced by the oxidation of hexagonal boron nitride and which is represented by the formula (2) can be suppressed to facilitate a uniform grain growth. From these viewpoints, the heating temperature in the step 2 is preferably 600°C or more and 1300°C or less, more preferably 700°C or more and 1100°C or less, and still more preferably 800°C or more and 900°C or less.

The heating time in the step 2 is preferably 1 hour or more and 20 hours or less, more preferably 2 hours or more and 16 hours or less, still more preferably 3 hours or more and 12 hours or less, and further still more preferably 4 hours or more and 10 hours or less.

Heating is performed under an oxygen gas-containing gas atmosphere. The partial pressure of the oxygen gas is not particularly limited, but heating is preferably performed under an atmosphere of an oxygen gas concentration of preferably 10% by volume or more and 50% by volume or less, more preferably 15% by volume or more and 30% by volume or less. As the oxygen gas-containing gas, air is preferably used from the viewpoint of production cost.

(Step 3)

The step 3 is a step of firing again a product after decarbonization, the product obtained in the step 2, at 1500°C or more and 2200°C or less under a nitrogen gas atmosphere, thereby obtaining the hBN powder according to the present invention. Through the step 3, grain growth of the primary particles in the hBN powder can be achieved.

The firing temperature in the step 3 is 1500°C or more and 2200°C or less from the viewpoint of facilitating the grain growth of the hBN primary particles. When the firing temperature is 1500°C or more, a sufficient grain growth reaction of the hBN primary particles is facilitated, and when the firing temperature is 2200°C or less, decomposition of hBN is suppressed. From these viewpoints, the firing temperature is preferably 1600°C or more and 2200°C or less, more preferably 1700°C or more and 2200°C or less.

The firing time in the step 3 is preferably 1 hour or more and 20 hours or less. When the firing time is 1 hour or more, the grain growth reaction of the hBN primary particles progresses sufficiently, and when the firing time is 20 hours or less, firing cost is reduced. From these viewpoints, the firing time is more preferably 1 hour or more and 15 hours or less, still more preferably 3 hours or more and 10 hours or less.

In the production method according to the present invention, a boron compound represented by a formula $(B_2O_3) \cdot (H_2O)_X$ wherein X = 0 to 3 is preferably further added from the viewpoint of facilitating the decarbonization and from the viewpoint of facilitating the crystal growth of the hBN primary particles. The addition may be before firing or heating in any of the steps 1 to 3, but from the viewpoint of facilitating the crystal growth of the hBN primary particles, the boron compound is preferably added in the step 3 to the product after decarbonization, which is obtained in the step 2.

As the boron compound, at least one selected from oxides of boron including: boron oxoacids such as orthoboric acid ($H_3BO_3$), metaboric acid ($HBO_2$) and tetraboric acid ($H_2B_4O_7$); boric anhydride ($B_2O_3$); and the like is preferable, and from the viewpoint of an easy availability and a good miscibility with the product after decarbonization, the boron compound is more preferably boric anhydride ($B_2O_3$).

The purity of the boron compound is preferably 90% by mass or more, more preferably 95% by mass or more, still more preferably 99% by mass or more, and further still more preferably 100% by mass.

The amount of the boron compound to be added is preferably 10 parts by mass or more and 80 parts by mass or less, more preferably 20 parts by mass or more and 70 parts by mass or less, still more preferably 30 parts by mass or more and 60 parts by mass or less, and further still more preferably 35 parts by mass or more and 55 parts by mass or less based on 100 parts by mass of the product after decarbonization from the viewpoint of facilitating the crystal growth of the hBN primary particles.

[Resin Composition]

The resin composition according to the present invention comprises the hexagonal boron nitride powder (hBN powder) and an organic matrix and has a content of the hBN powder of 10% by volume or more and 90% by volume or less based on the total amount of the hBN powder and the organic matrix. The content (% by volume) of the hBN powder in the resin composition according to the present invention is 10% by volume or more and 90% by volume or less, preferably 20% by volume or more and 80% by volume or less, more preferably 25% by volume or more and 75% by volume or less, still more preferably 30% by volume or more and 70% by volume or less, and further still more preferably 35% by volume or more and 65% by volume or less based on the total amount of the hBN powder and the organic matrix from the viewpoint of ease of production in the process of forming a composite with a resin and the thermal conductive properties. In the present invention, the content based on volume (% by volume) of the hBN powder can be determined from the specific gravity of the hBN powder at 25°C and specific gravities of various resins for use as the organic matrix at 25°C.

By using the hBN powder, the filling ability to a resin composition can be improved, and as a result, high thermal conductive properties can be exhibited. Further, the hBN powder comprises primary particles having a low aspect ratio, and therefore the orientation anisotropy in a resin composition or a resin sheet can be suppressed.

The content (% by mass) of the hBN powder in the resin composition according to the present invention is preferably 5% by mass or more and 95% by mass or less, more preferably 10% by mass or more and 90% by mass or less, still more preferably 15% by mass or more and 85% by mass or less, further still more preferably 20% by mass or more and 80% by mass or less, and further still more preferably 25% by mass or more and 75% by mass or less based on the total amount of the hBN powder and the organic matrix from the viewpoint of the ease of production in the process of forming a composite with a resin and the thermal conductive properties although the content depends on the type of the organic matrix to be used.

<Organic Matrix>

The resin composition according to the present invention comprises a resin as an organic matrix.

The resin for use in the present invention preferably comprises at least one resin selected from the group consisting of thermosetting resins, thermoplastic resins, various kinds of rubber, thermoplastic elastomers, oil, and the like.

Examples of the thermosetting resins include epoxy resins, silicone resins, phenol resins, urea resins, unsaturated polyester resins, melamine resins, polyimide resins, polybenzoxazole resins, and urethane resins.

Examples of the thermoplastic resins include: polyolefin resins such as polyethylene, polypropylene, and ethylene-vinyl acetate copolymers; polyester resins such as polyethylene terephthalate, polybutylene terephthalate, and liquid crystal polyesters; and polyvinyl chloride resins, acrylic resins, polyphenylene sulfide resins, polyphenylene ether resins, polyamide resins, polyamideimide resins, and polycarbonate resins.

Examples of the various kinds of rubber include natural rubber, polyisoprene rubber, styrene-butadiene copolymer rubber, polybutadiene rubber, ethylene-propylene copolymers, ethylene-propylene-diene copolymers, butadiene-acrylonitrile copolymers, isobutylene-isoprene copolymers, chloroprene rubber, silicone rubber, fluororubber, chlorosulfonated polyethylenes, and polyurethane rubber. These kinds of rubber are preferably crosslinked and used.

Examples of the thermoplastic elastomers include olefin-based thermoplastic elastomers, styrene-based thermoplastic elastomers, vinyl chloride-based thermoplastic elastomers, urethane-based thermoplastic elastomers, and ester-based thermoplastic elastomers.

Examples of the oil component include grease such as silicone oil.

The organic matrices may be used singly or in a combination or two or more.

The resin for use as the organic matrix can be selected appropriately according to the application of a thermally conductive member obtained using the resin composition according to the present invention and demand characteristics such as the mechanical strength, heat resistance, durability, softness, and flexibility of the thermally conductive member.

Among these, at least one resin selected from the group consisting of various thermosetting resins, thermoplastic resins, rubber, and thermoplastic elastomers, and the like which are used as the organic matrix of the conventional resin sheets, more preferably thermosetting resins, and still more preferably at least one selected from the group consisting of curable epoxy resins and curable silicone resins from the viewpoint of suppressing the orientation anisotropy and improving the thermal conductive properties.

The content (% by volume) of the organic matrix in the resin composition is preferably 10% by volume or more and 90% by volume or less, more preferably 20% by volume or more and 80% by volume or less, still more preferably 25% by volume or more and 75% by volume or less, further still more preferably 30% by volume or more and 70% by volume or less, and further still more preferably 35% by volume or more and 65% by volume or less based on the total amount of the hBN powder and the organic matrix from the viewpoint of the ease of production in the process of forming a composite with a resin and improvements in the thermal conductive properties. In the present invention, the content based on volume (% by volume) of the organic matrix can be determined from the specific gravity of the hBN powder at 25°C and specific gravities of various resins for use as the organic matrix at 25°C.

The content (% by mass) of the hBN powder in the resin composition according to the present invention is preferably 5% by mass or more and 95% by mass or less, more preferably 10% by mass or more and 90% by mass or less, still more preferably 15% by mass or more and 85% by mass or less, further still more preferably 20% by mass or more and 80% by mass or less, and further still more preferably 25% by mass or more and 75% by mass or less based on the total amount of the hBN powder and the organic matrix from the viewpoint of the ease of production in the process of forming a composite with a resin and the thermal conductive properties although the content depends on the type of the organic matrix to be used.

[Curable Epoxy Resin]

In the resin composition according to the present invention, as the curable epoxy resin for use as the organic matrix, epoxy resins which are in a liquid form at normal temperature and low softening point epoxy resins which are in a solid form at normal temperature are preferable from the viewpoint of dispersibility of the hBN powder to the organic matrix.

The curable epoxy resin is not particularly limited as long as the curable epoxy resin is a compound having two or more epoxy groups in one molecule, and any of the publicly known compounds which have been used conventionally as the epoxy resin can be selected and used appropriately. Examples of such an epoxy resin include bisphenol A type epoxy resins, bisphenol F type epoxy resins, glycidyl ethers of a polycarboxylic acid, and epoxy resins obtained through epoxidation of a cyclohexane derivative. These may be used singly or in a combination of two or more. Among the epoxy resins, bisphenol A type epoxy resins, bisphenol F type epoxy resins, and epoxy resins obtained through epoxidation of a cyclohexane derivative are suitable from the viewpoint of the heat resistance, workability, and the like.

(Curing Agent for Epoxy Resin)

A curing agent for epoxy resins is usually used for curing the curable epoxy resin. The curing agent for epoxy resins is not particularly limited, any of the curing agents which have been used conventionally as the curing agent for epoxy resins can be selected and used appropriately, and examples thereof include amine-based, phenol-based and acid anhydride-based curing agents. Examples of the amine-based curing agents preferably include dicyandiamide and aromatic diamines such as m-phenylenediamine, 4,4'-diaminodiphenylmethane, 4,4'-diaminodiphenylsulfone, and m-xylylenediamine, and examples of the phenol-based curing agents preferably include phenol novolac resins, cresol novolac resins, bisphenol A type novolac resins, and triazine-modified phenol novolac resins. In addition, examples of the acid anhydride-based curing agents include alicyclic acid anhydrides such as methylhexahydrophthalic anhydride, aromatic acid anhydrides such as phthalic anhydride, aliphatic acid anhydrides such as aliphatic dibasic acid anhydrides, and halogen-based acid anhydrides such as chlorendic anhydride.

These curing agents may be used singly or in a combination of two or more. The amount of the curing agent for epoxy resins to be used is usually selected in a range of an equivalent ratio of about 0.5 to about 1.5, preferably in a range of an equivalent ratio of 0.7 to 1.3 in terms of the equivalent ratio of the curing agent to the curable epoxy resin from the viewpoint of curability, a balance among physical properties of a cured resin, and the like.

(Curing Accelerator for Epoxy Resins)

In the resin composition according to the present invention, a curing accelerator for epoxy resins can be used as necessary together with the curing agent for epoxy resins.

The curing accelerator for epoxy resins is not particularly limited, any of the curing accelerators which have been used conventionally as the curing accelerator for epoxy resins can be selected and used appropriately. Examples include imidazole compounds such as 2-ethyl-4-methylimidazole, 1-benzyl-2-methylimidazole, 2-methylimidazole, 2-ethylimidazole, 2-isopropylimidazole, 2-phenylimidazole, and 2-phenyl-4-methylimidazole, 2,4,6-tris(dimethylaminomethyl)phenol, boron trifluoride-amine complexes, and triphenylphosphine. These curing accelerators may be used singly or in a combination of two or more. The amount of the curing accelerator for epoxy resins to be used is usually selected in a range of about 0.1 to about 10 parts by mass, preferably in a range of 0.4 to 5 parts by mass based on 100 parts by mass of the curable epoxy resin from the viewpoint of curing acceleration properties, the balance among physical properties of the cured resin, and the like.

[Curable Silicone Resin]

As the curable silicone resin, a mixture of an addition reaction type silicone resin and a silicone-based crosslinking agent can be used. Examples of the addition reaction type silicone resin include at least one selected from the group consisting of polyorganosiloxanes comprising an alkenyl group as a functional group in the molecule. Preferred examples of the polyorganosiloxanes comprising an alkenyl group as a functional group in the molecule include a polydimethylsiloxane comprising a vinyl group as a functional group, a polydimethylsiloxane comprising a hexenyl group as a functional group, and a mixture thereof.

Examples of the silicone-based crosslinking agent include polyorganosiloxanes comprising at least 2 silicon atom-bonded hydrogen atoms in one molecule, specifically, dimethylsiloxane-methylhydrogensiloxane copolymers end-capped with a dimethylhydrogensiloxy group, dimethylsiloxane-methylhydrogensiloxane copolymers end-capped with a trimethylsiloxy group, poly(methylhydrogensiloxane) end-capped with a trimethylsiloxane group, and poly(hydrogen silsesquioxane).

In addition, as a curing catalyst, a platinum-based compound is usually used. Examples of the platinum-based compound include particulate platinum, particulate platinum adsorbed on a carbon powder carrier, chloroplatinic acid, alcohol-modified chloroplatinic acid, olefin complexes of chloroplatinic acid, palladium, and rhodium catalysts.

The resin composition according to the present invention may further comprise another arbitrary component in a range where the effects of the present invention are obtained. Examples of such an arbitrary component include a particle of a nitride such as aluminum nitride, silicon nitride, and fibrous boron nitride, electrically insulating metal oxides such as alumina, fibrous alumina, zinc oxide, magnesium oxide, beryllium oxide, and titanium oxide, electrically insulating carbon components such as diamond and fullerene, a plasticizing agent, an adhesive, a reinforcing agent, a coloring agent, a heat resistance improver, a viscosity modifier, a dispersion stabilizer, and a solvent.

Moreover, in the resin composition according to the present invention, an inorganic filler such as aluminum hydroxide or magnesium hydroxide, a surface treating agent such as a silane coupling agent which improves the adhesion strength at an interface between the inorganic filler and the resin, a reducing agent, or the like may be added in addition to the materials each listed as an example of the nitride particle and the electrically insulating metal oxide as long as the effects of the present invention are not impaired.

The content of the arbitrary component in the resin composition is preferably 0% by volume or more and 30% by volume or less, more preferably 0% by volume or more and 20% by volume or less, and still more preferably 0.01% by volume or more and 10% by volume or less. In addition, the total amount of the hBN powder and the organic matrix in the resin composition is preferably 70% by volume or more and 100% by volume or less, more preferably 80% by volume or more and 100% by volume or less, and still more preferably 90% by volume or more and 99.99% by volume or less.

The resin composition according to the present invention can be produced, for example, in the manner as described below.

The organic matrix is first prepared by mixing the resin, and the curing agent as necessary. In addition, a solvent may further be added as necessary to the organic matrix from the viewpoint of adjusting viscosity in producing the resin sheet described later. Subsequently, the hBN powder is added to the organic matrix so that the hBN powder can be contained in a proportion of 10% by volume or more and 90% by volume or less based on the total amount of the organic matrix and the hBN powder. The weight of the hBN powder at 25°C and of the resin are each set according to the specific gravity of the hBN powder and the specific gravity of the resin to be used as the organic matrix so that a desired % by volume of the hBN powder and of the resin can be contained, and the hBN powder and the resin are weighed and then mixed to prepare the resin composition.

In the case where the curable epoxy resin is used as a main component of the organic matrix in the resin composition according to the present invention, a mixture of the curable epoxy resin, the curing agent for epoxy resins, and the curing accelerator for epoxy resins which is used as necessary forms the organic matrix. In addition, in the case where the curable silicone resin is used as a main component of the organic matrix, a mixture of the addition reaction type silicone resin, the silicone-based crosslinking agent, and the curing catalyst forms the organic matrix.

Furthermore, in the case where a solvent is added in preparing the organic matrix, components excluding the solvent form the organic matrix.

The resin composition which is obtained in this way can be used for a thermally conductive member such as a thermally conductive sheet, thermally conductive gel, thermally conductive grease, a thermally conductive adhesive, or a phase change sheet. As a result, the heat from a heat generating electronic component such as an MPU, a power transistor, or a transformer can be transferred efficiently to a heat dissipation component such as a heat dissipation fin or a heat dissipation fan.

Among the thermally conductive members, the resin composition is preferably used as a thermally conductive sheet and for a resin sheet. By using the resin composition for a resin sheet, the effects of the resin composition can be particularly exhibited from the viewpoint of suppressing the orientation anisotropy and the viewpoint of improvements in the thermal conductive properties.

[Resin Sheet]

The resin sheet according to the present invention comprises the resin composition or a cured product thereof and is obtained by molding the resin composition into a sheet. In the case where the resin composition is curable, the resin sheet according to the present invention is obtained by molding the resin composition into a sheet and then curing the molded resin composition.

The resin sheet according to the present invention can be produced by applying the resin composition on a release layer of a base material, such as a resin film with a release layer, with a usual coating machine or the like, and, in the case where the resin composition comprises a solvent, then drying the solvent with a far infrared ray radiation heater, or by hot air blowing or the like to form a sheet.

As the release layer, a melamine resin or the like is used. In addition, as the resin film, a polyester resin or the like such as polyethylene terephthalate is used.

In the case where the organic matrix in the resin composition is not a curable organic matrix such as the curable epoxy resin or the curable silicone resin, the resin sheet per se which is formed into a sheet is the resin sheet according to the present invention.

Further, in the case where the organic matrix is a curable matrix, the resin sheet which is obtained above and formed on the base material is pressurized as necessary through the base material from a side of a surface of the base material, the surface not coated with the resin composition, and is then further subjected to a heat treatment to be cured to obtain the resin sheet according to the present invention. The pressurization condition is preferably 15 MPa or more and 20 MPa or less, more preferably 17 MPa or more and 19 MPa or less. In addition, the heat condition is preferably 80°C or more and 200°C or less, more preferably 100°C or more and 150°C or less. It is to be noted that the base material for the releasable film and the like is usually peeled or removed finally.

The film thickness of the resin sheet according to the present invention which is obtained in this way is preferably 50 $\mu$m or more and 10 mm or less, more preferably 50 $\mu$m or more and 1.0 mm or less, still more preferably 50 $\mu$m or more and 500 $\mu$m or less, further still more preferably 60 $\mu$m or more and 400 $\mu$m or less, and further still more preferably

70 μm or more and 300 μm or less from the viewpoint of moldability. Moreover, the film thickness of the resin sheet according to the present invention is preferably in a range of 50 μm or more and 150 μm or less, more preferably 60 μm or more and 130 μm or less, and still more preferably 70 μm or more and 110 μm or less from the viewpoint of reducing the weight and thickness of electronic components and the like for which the resin sheet is used.

The resin sheet according to the present invention has a thermal conductivity in the thickness direction of preferably 5.0 W/m·K or more, more preferably 10 W/m·K or more, still more preferably 15 W/m·K or more, further still more preferably 18 W/m·K or more, further still more preferably 20 W/m·K, further still more preferably 22 W/m·K or more, and further still more preferably 24 W/m·K or more.

As for the thermal conductivity, the thermal diffusivity is measured with a model name "LFA447 NanoFlash" manufactured by Erich NETZSC GmbH & Co. Holding KG, and a value calculated by multiplying the thermal diffusivity value by the theoretical values of the specific heat and the density of each resin sheet can be determined as the thermal conductivity in the thickness direction of the resin sheet.

It is to be noted that in the case where, for example, a curable liquid epoxy resin is used as the organic matrix, the theoretical value of the density of the resin sheet can be calculated by the following expression (3) wherein the theoretical density of boron nitride is assumed to be 2.27 g/cm$^3$; the theoretical density of the resin component is assumed to be 1.17 g/cm$^3$; a value obtained by multiplying the theoretical density of boron nitride by the content (% by volume) of boron nitride in the resin sheet and a value obtained by multiplying the theoretical density of the resin component by the content (% by volume) of the resin component in the resin sheet are summed up; and the result is multiplied by 1/100.

$$\text{Theoretical value of density of resin sheet (g/cm}^3) = [(2.27 \times \text{content (\% by volume) of boron nitride} + 1.17 \times \text{content (\% by volume) of resin component)} \times (1/100)] \quad (3)$$

The resin sheet according to the present invention has a specific gravity rate of preferably 90% or more and 100% or less, more preferably 95% or more and 100% or less, and still more preferably 98% or more and 100% or less, and further still more preferably 100% from the viewpoint of the electric insulation.

The specific gravity rate can be calculated by the following expression (4) wherein the specific gravity of the resin sheet, which is obtained by an Archimedes method through measurement using an electronic balance (model name "CP224S") and specific gravity/density determination kit (model name "YDK01IYDK01-OD/YDK01LP") each manufactured by Sartorius Mechatronics Japan K.K., is divided by the theoretical specific gravity of the resin sheet, and the result is multiplied by 100.

$$\text{Specific gravity rate} = [(\text{specific gravity of resin sheet obtained through measurement/theoretical specific gravity of resin sheet)} \times 100] \quad (4)$$

It is to be noted that in the case where, for example, a curable liquid epoxy resin is used as the organic matrix, the theoretical specific gravity of the resin sheet can be calculated by the following expression (5) wherein the theoretical density of boron nitride is assumed to be 2.27 g/cm$^3$; the theoretical density of the resin component is assumed to be 1.17 g/cm$^3$; a value obtained by multiplying the theoretical density of boron nitride by the content (% by volume) of boron nitride in the resin sheet and a value obtained by multiplying the theoretical density of the resin component by the content (% by volume) of the resin component in the resin sheet are summed up; and the result is multiplied by 1/100.

$$\text{Theoretical specific gravity of resin sheet} = [(2.27 \times \text{content (\% by volume) of boron nitride} + 1.17 \times \text{content (\% by volume) of resin component)} \times (1/100)] \quad (5)$$

The resin sheet thus obtained can be made to be a product form for use as a resin sheet in a state where the obtained resin sheet is peeled from the releasable film or in a state where the releasable film is used as a protective film.

Moreover, the resin sheet according to the present invention may have a configuration in which an adhesive layer is further provided on the upper surface or the lower surface of the resin sheet, thereby enhancing convenience during the use of a product.

Furthermore, the resin sheet according to the present invention may be used by laminating or embedding a member in a sheet form, a fiber form, or a net-like appearance on one surface or both surfaces thereof, or in the sheet, for improving workability or reinforcement.

The resin sheet according to the present invention is used, for example, as a thermally conductive sheet with which the heat from a heat generating electronic component such as an MPU, a power transistor, or a transformer is transferred to a heat dissipation component such as a heat dissipation fin or a heat dissipation fan, and is used by being interposed between the heat generating electronic component and the heat dissipation component. Thereby, the heat transfer between the heat generating electronic component and the heat dissipation component becomes good and malfunction of the heat generating electronic component can be reduced remarkably.

Examples

Hereinafter, the present invention will be described further specifically giving Examples and Comparative Examples.

<Production of hBN Powder>

[Example 1]

(Step 1)

In a graphite crucible, 100 g of a commercially available boron carbide powder (50% volume cumulative particle size $D_{50}$: 3 $\mu$m, purity: 95% by mass) was placed, and fired at 2000°C under a nitrogen gas atmosphere for 8 hours using a high-frequency furnace. The resultant fired product contained carbon as an impurity and therefore exhibited a black color.

(Step 2)

The fired product was placed in an alumina crucible and heated at 900°C under an air atmosphere for 10 hours using an electric furnace. The obtained product exhibited a gray color because decarbonization had progressed in the obtained product.

(Step 3)

The product after decarbonization was placed in a graphite crucible and fired again at 1600°C to 2200°C under a nitrogen gas atmosphere for 10 hours in total using a high-frequency furnace to obtain a white, highly crystallized hBN powder.

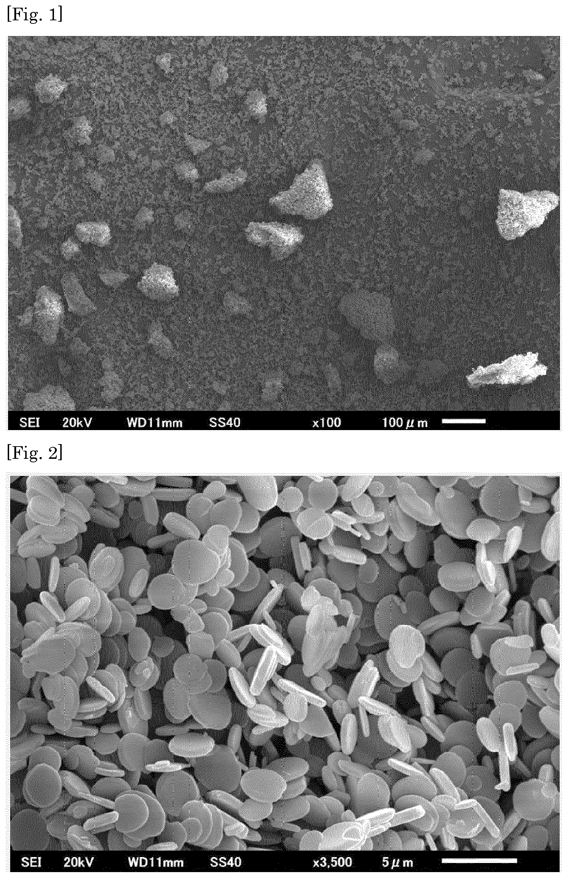

Evaluation was conducted by the method described later for the obtained hBN powder. In addition, an SEM image and an enlarged SEM image of the obtained hBN powder are shown in Fig. 1 and Fig. 2.

[Example 2]

(Step 1)

In a graphite crucible, 100 g of the same boron carbide powder as the one in Example 1 was placed, and then fired at 2000°C under a nitrogen gas atmosphere for 8 hours using a high-frequency furnace. The resultant fired product contained carbon as an impurity and therefore exhibited a black color.

(Step 2)

The fired product was placed in an alumina crucible and heated at 700°C under an air atmosphere for 15 hours using an electric furnace. The obtained product exhibited a gray color because decarbonization had progressed in the obtained product.

(Step 3)

A mixture obtained by adding 50 parts by mass of boron oxide ($B_2O_3$, boric anhydride) manufactured by KANTO CHEMICAL CO., INC. as the boron compound to 100 parts by mass of the product after decarbonization was mixed, then placed in a graphite crucible, and fired again at 1600 to 2200°C under a nitrogen gas atmosphere for 10 hours in total using a high-frequency furnace to obtain a white, highly crystallized hBN powder.

Evaluation was conducted by the method described later for the obtained hBN powder.

[Comparative Example 1]

(Step 1)

In a graphite crucible, 100 g of the same boron carbide powder as the one in Example 1 was placed, and then fired at 2000°C under a nitrogen gas atmosphere for 8 hours using a high-frequency furnace. The resultant fired product contained carbon as an impurity and therefore exhibited a black color.

(Step 3')

A mixture obtained by adding 40 parts by mass of boron oxide ($B_2O_3$, boric anhydride) manufactured by KANTO CHEMICAL CO., INC. as the boron compound to 100 parts by mass of the fired product was mixed, then placed in a graphite crucible, and fired again at 1600 to 2200°C under a nitrogen gas atmosphere for 10 hours in total using a high-frequency furnace to obtain a white, highly crystallized hBN powder without the step 2 in Example 1.

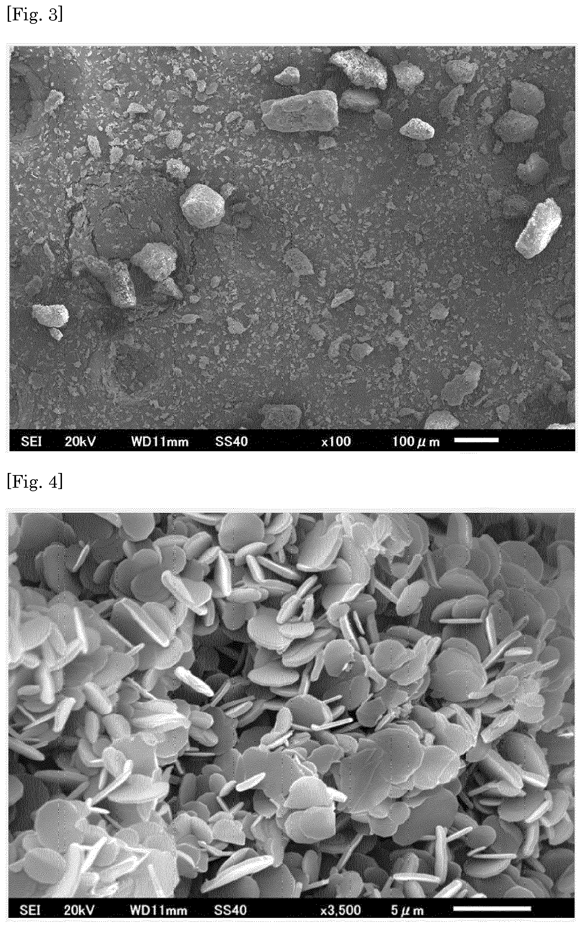

Evaluation was conducted by the method described later for the obtained hBN. In addition, an SEM image and an enlarged SEM image of the obtained hBN powder are shown in Fig. 3 and Fig. 4.

[Comparative Example 2]

A mixture obtained by adding 4 g of boric acid, 2 g of melamine, and 1 g of water was stirred and mixed, and the resultant mixture was put into a metal mold and then pressurized to obtain a molded body having a density of 0.7 g/cm$^3$. A dried product obtained by drying the molded body in a dryer at 300°C for 100 minutes was calcined at 1100°C under an $NH_3$ gas atmosphere for 120 minutes. The calcined product thus obtained (crude hBN) was pulverized to obtain a crude hBN powder (content of boron oxide: 35% by mass).

As the carbon source (C), 10 parts by mass of the artificial graphite fine powder "UF-G30" manufactured by Showa Denko K.K., 0.4 parts by mass of calcium carbonate as the Ca compound, and 10 parts by mass of an aqueous PVA solution (concentration of 2.5% by mass) were added based on 100 parts by mass of the crude hBN powder to obtain a mixture having a content of the carbon source in terms of carbon of 10 parts by mass based on 100 parts by mass of the crude hBN powder.

The mixture was stirred and mixed with a mixer, thereafter put into a metal mold, and then pressurized to obtain a molded body having a density of 1.2 g/cm$^3$. The molded body was dried in a dryer at 300°C for 6 hours to obtain a dried product. The dried product was fired using a high-frequency furnace at 1750°C to 2200°C under a nitrogen gas atmosphere for 6 hours in total to obtain an hBN fired product. Evaluation was conducted by the method described later for the hBN powder obtained by cracking the hBN fired product.

[Comparative Example 3]

Evaluation was conducted by the method described later using an hBN powder "UHP-EX" manufactured by Showa Denko K.K.

<Preparation of Resin Composition>

A resin composition was prepared using each of the hBN powders obtained in Examples and Comparative Examples.

Firstly, 100 parts by mass of a curable liquid epoxy resin (manufactured by Japan Epoxy Resin, trade name "jER 828", bisphenol A type, epoxy equivalence of 184 to 194 g/eq) and 5 parts by mass of imidazole (manufactured by SHIKOKU CHEMICALS CORPORATION, trade name "2E4MZ-CN") as a curing agent were mixed to prepare an organic matrix.

Subsequently, each of the hBN powders obtained in Examples and Comparative Examples was added thereto so that the content of the hBN powder was 60% by volume based on the total amount of the hBN powder and the organic matrix, and the resultant mixture was stirred and mixed using MAZERUSTAR (R) manufactured by KURABO INDUSTRIES LTD. to prepare a resin composition.

It is to be noted that the content based on volume (% by volume) of the hBN powder was determined from the specific gravity of the hBN powder (2.27) at 25°C and the specific gravity of the curable liquid epoxy resin (1.17) for use as the organic matrix at 25°C.

<Preparation of Resin Sheet>

Molding was performed using the resin composition and a metallic mold on a releasable film cut to 10.5 cm wide and 13 cm length so that the cured film thickness was 500 $\mu$m or less. Thereafter, the molded resin composition was interposed between releasable films, and then crimping was performed on the molded resin composition through the releasable films with a metallic mold under conditions of 120°C and 18 MPa for 10 minutes to cure the resin composition, thereby preparing a resin sheet.

[Evaluation]

The following evaluations were conducted for the boron carbide powder used in Examples and Comparative Examples and each of the hBN powders obtained in Examples and Comparative Examples. The evaluation results are shown in Table 1.

($D_{50}$ of Boron Carbide Powder)

A dispersion liquid containing 0.1 g of the boron carbide powder used in Examples and Comparative Examples, 50 g of water, and, as a dispersant, 0.005 g of a commercially available detergent (trade name "Mama Lemon", manufactured by Lion Corporation) was prepared. Subsequently, the 50% volume cumulative particle size $D_{50}$ of the boron carbide powder was measured by a particle size distribution obtained using a particle size distribution analyzer (manufactured by NIKKISO CO., LTD., model name "Microtrac MT3300EX II") while stirring the dispersion liquid using a magnetic stirrer under a condition of a number of revolutions of 400 rpm.

(Average Longer Diameter (L), Average Thickness (D), and Aspect Ratio [L/D] of Primary Particles in hBN powder)

An SEM image was taken using a scanning electron microscope for each of the hBN powders obtained in Examples and Comparative Examples, and 100 hBN primary particles the longer diameter and the thickness of which are measurable were arbitrarily extracted from the obtained SEM image to measure the lengths of the longer diameters and the thicknesses. The number average value of the longer diameters was determined as the average longer diameter (L), and the number average value of the thicknesses was determined as the average thickness (D) to calculate the aspect ratio [L/D].

(Content of Primary Particles Having Aspect Ratio [l/d] of 3.0 or More and 5.0 or Less)

An SEM image was taken using a scanning electron microscope for each of the hBN powders obtained in Examples and Comparative Examples, and 100 hBN primary particles the longer diameter (l) and the thickness (d) of which are measurable were arbitrarily extracted from the obtained SEM image, and the proportion of the number of primary particles having an aspect ratio [l/d] of 3.0 or more and 5.0 or less was calculated as the content (%).

($D_{50}(1)$ before Ultrasonic Treatment of Classified hBN Powder)

The hBN powder obtained in each of Examples and Comparative Examples was classified using a sieve having an opening of 106 $\mu$m with a dry type vibrating sieve apparatus (manufactured by KOEISANGYO Co., Ltd., trade name "SATO'S SYSTEM VIBRO SEPARATOR") setting the sieving time to 60 minutes to obtain a classified hBN powder passing through the sieve, and then a dispersion liquid containing 0.06 g of the classified hBN powder, 50 g of water, and, as a dispersant, 0.005 g of a commercially available detergent (trade name "Mama Lemon", manufactured by Lion Corporation) was prepared. The $D_{50}(1)$ before the ultrasonic treatment was measured by a particle size distribution obtained using a particle size distribution analyzer (manufactured by NIKKISO CO., LTD., model name "Microtrac MT3300EX II") while stirring the dispersion liquid using a magnetic stirrer under a condition of a number of revolutions of 400 rpm.

Subsequently, a dispersion liquid containing 0.06 g of the classified hBN powder, 50 g of water, and, as a dispersant, 0.005 g of a commercially available detergent (trade name "Mama Lemon", manufactured by Lion Corporation) was placed in a 50-ml container and was then subjected to an ultrasonic treatment using an ultrasonic treatment apparatus (manufactured by NIHONSEIKI KAISHA LTD., model name "Ultrasonic Homogenizer US-150V") under conditions of au output of 150 W and an oscillating frequency of 19.5 kHz for 3 minutes.

(BET Specific Surface Area of hBN Powder)

The BET specific surface area was measured for each of the hBN powders obtained in Examples and Comparative Examples by the BET one-point method utilizing the fluid process using a full-automatic BET specific surface area measuring apparatus (manufactured by Yuasa Ionics Inc., model name "Multisorb 16").

(Boron Oxide ($B_2O_3$) Content and Calcium Hexaboride ($CaB_6$) Content in hBN Powder)

Each of the hBN powders obtained in Examples and Comparative Examples was subjected to an acid treatment with 0.1 N a diluted sulfuric acid solution (hereinafter, also referred to as "acid solution"). Through this acid treatment, boron oxide ($B_2O_3$) in the hBN powder dissolves in the acid solution. Subsequently, the amount of a B element existing in the acid solution after the acid treatment was measured with an apparatus for ICP analysis (manufactured by SII Nano Technology Inc., model name "SPS 3500"). The amount of $B_2O_3$ which had dissolved through the acid treatment was calculated as the content of $B_2O_3$ from the amount of the B element existing in the acid solution after the acid treatment.
The amount of a Ca element existing in the acid solution after the acid treatment was measured with the apparatus for ICP analysis, and the content of $CaB_6$ was calculated from the amount of the Ca element.

(Carbon Content in hBN powder)

The carbon content in each of the hBN powder obtained in each of Examples and Comparative Examples was measured using a carbon analyzer (manufactured by LECO Japan Corporation, model name "CS230").

(Purity of hBN powder)

The total amount of the $B_2O_3$ content, the $CaB_6$ content, and the carbon content in the hBN powder measured as described above were regarded as the amount of impurities to determine the purity of the hBN powder.

Table 1

| | | Average longer diameter (L) | Average thickness (D) | Aspect ratio [L/D] | Content *1 | $D_{50}(1)$ before ultrasonic treatment | BET specific surface area | $B_2O_3$ content | $CaB_6$ content | Carbon content | Purity |
|---|---|---|---|---|---|---|---|---|---|---|---|
| | | $\mu m$ | $\mu m$ | - | % | $\mu m$ | $m^2/g$ | % by mass | % by mass | % by mass | % by mass |
| Example | 1 | 2.77 | 0.59 | 4.9 | 61 | 36.5 | 3.1 | 0.01 | 0.008 | 0.01 | 99.97 |
| | 2 | 1.82 | 0.39 | 4.8 | 64 | 74.9 | 9.4 | 0.02 | 0.008 | 0.02 | 99.95 |
| Comparative Example | 1 | 3.99 | 0.62 | 7.0 | 32 | 51.8 | 5.1 | 0.04 | 0.008 | 0.03 | 99.92 |
| | 2 | 9.55 | 0.63 | 16.1 | 1 | 24.7 | 3.5 | 0.05 | 0.026 | 0.01 | 99.91 |
| | 3 | 10.5 | 0.75 | 14.0 | 2 | 35.3 | 3.1 | 0.3 | 1.30 | 0.02 | 98.38 |
| | | | | | | | | | | | |
| | | | | | | | | | | | |
| | | | | | | | | | | | |
| *1: Content (% by number) of primary particles having aspect ratio [l/d] of 3.0 or more and 5.0 or less | | | | | | | | | | | |

It is understood from Table 1 that the hBN powders of Examples 1 and 2 have a smaller average longer diameter (L), as small as 10 μm or less, have a lower aspect ratio [L/D], as low as 5.0 or less, and have a higher purity than the hBN powders of Comparative Examples 1 to 3.

In addition, the content of the primary particles having an aspect ratio [l/d] of 3.0 or more and 5.0 or less is 25% or more in Examples 1 and 2, and therefore it is considered that the primary particles of hBN maintain random orientation in the process of forming a composite with a resin in molding the resin composition comprising the hBN powder into a resin sheet, and, further, in the obtained resin sheets, so that the orientation anisotropy can be suppressed and a high thermal conductivity can be exhibited.

Industrial Applicability

The hexagonal boron nitride powder (hBN powder) according to the present invention is a high-purity hBN powder comprising hBN primary particles having a low aspect ratio and can be utilized effectively as an hBN powder having a more suppressed orientation anisotropy in a resin composition or a resin sheet than conventional hBN powders and having superior thermal conductive properties. In addition, the method for producing the hexagonal boron nitride powder (hBN powder) according to the present invention can be utilized effectively as a method for producing the useful hBN powder.

Furthermore, the resin sheet according to the present invention is used as a thermally conductive sheet with which the heat from a heat generating electronic component such as an MPU, a power transistor, or a transformer is transferred to a heat dissipation component such as a heat dissipation fin or a heat dissipation fan, and is used by being interposed between the heat generating electronic component and the heat dissipation component. Thereby, the heat transfer between the heat generating electronic component and the heat dissipation component becomes good and malfunction of the heat generating electronic component can be reduced remarkably.

**Claims**

1. A hexagonal boron nitride powder having: an average longer diameter (L) of primary particles in the hexagonal boron nitride powder of 10 μm or less; an average thickness (D) of the primary particles in the hexagonal boron nitride powder of 0.20 μm or more; a ratio of the average longer diameter (L) to the average thickness (D), [L/D], of 3.0 or more and 5.0 or less; and a content of primary particles having a ratio of a longer diameter (1) to a thickness (d), [l/d], of 3.0 or more and 5.0 or less of 25% or more by number, wherein the hexagonal boron nitride powder comprises an aggregate of two or more primary particles, and when the hexagonal boron nitride powder is put through a sieve having an opening of 106 μm, the hexagonal boron nitride powder passing through the sieve has a 50% volume cumulative particle size $D_{50}(1)$ of 25 μm or more and 100 μm or less.

2. The hexagonal boron nitride powder according to claim 1, wherein the content is 50% or more by number.

3. The hexagonal boron nitride powder according to claim 1 or 2, having a content of $CaB_6$ of 0.01% by mass or less.

4. A resin composition comprising:

   the hexagonal boron nitride powder according to any one of claims 1 to 3; and
   an organic matrix, wherein
   the composition has a content of the hexagonal boron nitride powder of 10% by volume or more and 90% by volume or less based on a total amount of the hexagonal boron nitride powder and the organic matrix.

5. A resin sheet comprising the resin composition according to claim 4 or a cured product thereof.

6. A method for producing the hexagonal boron nitride powder according to any one of claims 1 to 3, the method comprising the following steps 1 to 3:

   Step 1: a step of firing a boron carbide powder at 1600°C or more and 2200°C or less under a nitrogen gas atmosphere;
   Step 2: a step of heating a fired product obtained in the step 1 at 500°C or more and less than 1500°C under an oxygen gas-containing gas atmosphere, thereby decarbonizing the fired product; and
   Step 3: a step of firing again a product after decarbonization, the product obtained in the step 2, at 1500°C or more and 2200°C or less under a nitrogen gas atmosphere.

7. The method for producing the hexagonal boron nitride powder according to claim 6, wherein 10 parts by mass or more and 80 parts by mass or less of a boron compound represented by a formula $(B_2O_3)\cdot(H_2O)_x$ wherein X = 0 to 3 based on 100 parts by mass of the product after decarbonization is added in the step 3.

**Patentansprüche**

1. Hexagonales Bornitridpulver mit: einem durchschnittlichen längeren Durchmesser (L) von Primärteilchen in dem hexagonalen Bornitridpulver von 10 $\mu$m oder weniger; einer durchschnittlichen Dicke (D) der Primärteilchen in dem hexagonalen Bornitridpulver von 0.20 $\mu$m oder mehr; einem Verhältnis des durchschnittlichen längeren Durchmessers (L) zu der durchschnittlichen Dicke (D), [L/D], von 3,0 oder mehr und 5,0 oder weniger; und einem Gehalt an Primärteilchen mit einem Verhältnis eines längeren Durchmessers (l) zu einer Dicke (d), [l/d], von 3,0 oder mehr und 5,0 oder weniger von 25 % oder mehr nach Anzahl,
   wobei das hexagonale Bornitridpulver ein Aggregat aus zwei oder mehr Primärteilchen umfasst und, wenn das hexagonale Bornitridpulver durch ein Sieb mit einer Öffnung von 106 $\mu$m gegeben wird, das hexagonale Bornitridpulver, das durch das Sieb hindurchgeht, eine kumulative Teilchengröße $D_{50}(1)$ von 50% des Volumens von 25 $\mu$m oder mehr und 100 $\mu$m oder weniger aufweist.

2. Hexagonales Bornitridpulver nach Anspruch 1, wobei der Gehalt 50 % oder mehr nach Anzahl beträgt.

3. Hexagonales Bornitridpulver nach Anspruch 1 oder 2 mit einem $CaB_6$-Gehalt von 0,01 Massenprozent oder weniger.

4. Harzzusammensetzung, die Folgendes umfasst:

   das hexagonale Bornitridpulver nach einem der Ansprüche 1 bis 3; und
   eine organische Matrix, wobei
   die Zusammensetzung einen Gehalt an hexagonalem Bornitridpulver von 10 Volumenprozent oder mehr und 90 Volumenprozent oder weniger, bezogen auf die Gesamtmenge des hexagonalen Bornitridpulvers und der organischen Matrix, aufweist.

5. Harzflächengebilde, das die Harzzusammensetzung nach Anspruch 4 oder ein gehärtetes Produkt davon enthält.

6. Verfahren zur Herstellung des hexagonalen Bornitridpulvers nach einem der Ansprüche 1 bis 3, wobei das Verfahren die folgenden Schritte 1 bis 3 umfasst:

   Schritt 1: ein Schritt des Brennens eines Borkarbidpulvers bei 1600 °C oder mehr und 2200 °C oder weniger unter einer Stickstoffgasatmosphäre;
   Schritt 2: ein Schritt des Erhitzens eines in Schritt 1 erhaltenen gebrannten Produkts auf 500 °C oder mehr und weniger als 1500 °C unter einer sauerstoffhaltigen Gasatmosphäre, wodurch das gebrannte Produkt entkohlt wird; und
   Schritt 3: ein Schritt des erneuten Brennens des in Schritt 2 erhaltenen Produkts nach der Entkohlung bei 1500 °C oder mehr und 2200 °C oder weniger unter einer Stickstoffgasatmosphäre.

7. Verfahren zur Herstellung des hexagonalen Bornitridpulvers nach Anspruch 6, wobei 10 Masseteile oder mehr und 80 Masseteile oder weniger einer Borverbindung der Formel $(B_2O_3)\cdot(H_2O)_X$, wobei X = 0 bis 3 ist, bezogen auf 100 Masseteile des Produkts nach der Entkohlung in Schritt 3 zugegeben werden.

**Revendications**

1. Poudre de nitrure de bore hexagonal ayant : un grand diamètre moyen (L) de particules primaires dans la poudre de nitrure de bore hexagonal de 10 $\mu$m ou moins ; une épaisseur moyenne (D) des particules primaires dans la poudre de nitrure de bore hexagonal de 0,20 $\mu$m ou plus ; un rapport du grand diamètre moyen (L) à l'épaisseur moyenne (D), [L/D], de 3,0 ou plus et de 5,0 ou moins ; et une teneur de particules primaires ayant un rapport d'un grand diamètre (l) à une épaisseur (d), [l/d], de 3,0 ou plus et de 5,0 ou moins de 25 % ou plus en nombre,
   dans laquelle la poudre de nitrure de bore hexagonal comprend un agrégat de deux particules primaires ou plus, et lorsque la poudre de nitrure de bore hexagonal traverse un tamis ayant une ouverture de 106 $\mu$m, la poudre de nitrure de bore hexagonal traversant le tamis a une taille de particule pour un volume cumulatif de 50 % $D_{50}(1)$ de 25 $\mu$m ou plus et de 100 $\mu$m ou moins.

**2.** Poudre de nitrure de bore hexagonal selon la revendication 1, dans laquelle la teneur est de 50 % ou plus en nombre.

**3.** Poudre de nitrure de bore hexagonal selon la revendication 1 ou 2, ayant une teneur de $CaB_6$ de 0,01 % en masse ou moins.

**4.** Composition de résine comprenant :

la poudre de nitrure de bore hexagonal selon l'une quelconque des revendications 1 à 3 ; et
une matrice organique, dans laquelle
la composition a une teneur de la poudre de nitrure de bore hexagonal de 10 % en volume ou plus et de 90 % en volume ou moins sur la base d'une quantité totale de la poudre de nitrure de bore hexagonal et de la matrice organique.

**5.** Feuille de résine comprenant la composition de résine selon la revendication 4 ou un produit durci de celle-ci.

**6.** Procédé de production de la poudre de nitrure de bore hexagonal selon l'une quelconque des revendications 1 à 3, le procédé comprenant les étapes 1 à 3 suivantes :

Étape 1 : une étape de cuisson d'une poudre de carbure de bore à 1 600 °C ou plus et 2 200 °C ou moins dans une atmosphère de gaz d'azote ;
Étape 2 : une étape de chauffage d'un produit cuit obtenu dans l'étape 1 à 500 °C ou plus et moins de 1 500 °C dans une atmosphère gazeuse contenant de l'oxygène gazeux, décarbonisant ainsi le produit cuit ; et
Étape 3 : une étape de nouvelle cuisson d'un produit après décarbonisation, du produit obtenu dans l'étape 2, à 1 500 °C ou plus et 2 200 °C ou moins dans une atmosphère de gaz d'azote.

**7.** Procédé de production de la poudre de nitrure de bore hexagonal selon la revendication 6, dans lequel 10 parties en masse ou plus et 80 parties en masse ou moins d'un composé boré représenté par une formule $(B_2O_3) \cdot (H_2O)_x$ dans laquelle X = 0 à 3 sur la base de 100 parties en masse du produit après décarbonisation sont ajoutées dans l'étape 3.

[Fig. 1]

[Fig. 2]

[Fig. 3]

SEI    20kV    WD11mm    SS40    x100    100 μm

[Fig. 4]

SEI    20kV    WD11mm    SS40    x3,500    5 μm

**EP 3 421 420 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61286207 A
- JP 3461651 B
- JP 5085482 B
- JP 2011098882 A
- JP 2005343728 A
- JP 4750220 B
- JP 5081488 B
- JP 2015212217 A
- WO 2015122378 A1
- EP 3106429 A1
- EP 2487134 A1